# EUROPEAN PATENT APPLICATION

(11) **EP 2 085 433 A1**
(43) Date of publication of application: **05.08.2009**
(21) Application number: 08001154.7
(22) Date of filing: 23.01.2008
(51) Int. Cl.: C09B 67/48, C08K 5/00

(54) **New crystal modifications of a disazo condensation pigment**

(71) Applicant: Clariant International Ltd., 4132 Muttenz 1 (CH)
(72) Inventor: Plüg, Carsten, Dr., 64367 Mühltal/Niederbeerbach (DE); Ramamurthy, Rajesh, Dr., Thane 400 601, Maharashtra (IN); Nabar, Uday, Dr., Vile Parle (east), Mumbai 400 057 (IN); Piastra, Bruno, Dr., F-68330 Huningue (FR)
(74) Representative: Hütter, Klaus

(57) **Abstract**

The invention relates to a pigment of formula (I) 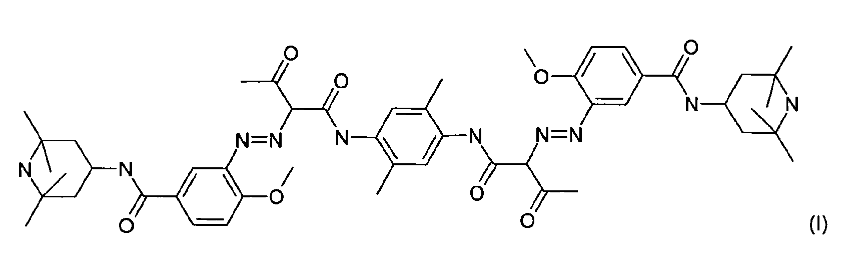 in two new neutral yellow crystal modifications having color characteristics in the CIELAB system of chrome (C) of 74.0 - 78.0 and hue (H) of 87.0° - 91.0° measured in HDPE at 1/3 standard depth according to DIN 53235. The invention further relates to a process to obtain said pigments.

## Description

The present invention relates to a novel form of a pigment of the formula (I) having distinct color characteristics and x-ray diffraction pattern, to a method for the preparation of said pigment form and the use of the pigment in high molecular weight organic materials.

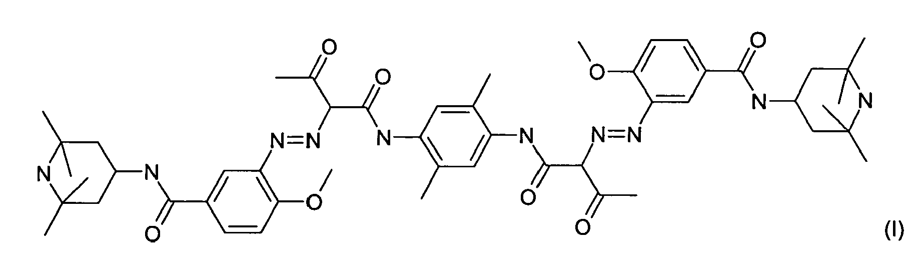

The pigment of the formula (I) was first described in US 4,866,113, Ex. 23 as a yellow pigment. US 4,866,113 discloses a method for its preparation and describes the resulting pigment as reddish yellow, hereinafter called the alpha crystal modification providing good pigmentary properties, but a dull yellow shade.
The alpha crystal modification is characterized in by X-ray diffraction pattern by two strong peaks corresponding to two theta double glancing angles of 8.3 and 8.4, ten medium strength peaks corresponding to two theta double glancing angles of 12.4, 13.2, 17.0, 17.3, 19.4, 20.6, 22.4, 25.4, 25.5, and 27.3, and four relatively weak peaks corresponding to two theta double glancing angles of 5.7, 31.8, 43.1 and 72.6.

An organic pigment of formula (I), having a neutral yellow hue, i.e. greener than the alpha modification, is desired because it can compete with existing yellow pigments such as P.Y. 95, a state of the art pigment in this area of shade. In addition, a higher chroma would offer more opportunities to create new shades by combining these pigments with other colour pigments, white pigments and effect pigments as metal flakes or pearlescent pigments.

Surprisingly, new crystalline modifications of formula (I) are provided having different X-ray diffraction spectra and a more greenish and neutral yellow shade.

The present invention provides a process for preparing a pigment of formula (I) in a neutral yellow crystal modification, comprising the step of treating a crude microcrystalline form or the alpha phase of the pigment of formula (I) at elevated temperatures in an organic solvent selected from the group of aprotic dipolar solvents with a boiling point above 120 °C at 1013 hPa.

A crude microcrystalline form of the pigment of formula (I) can be synthesized e. g. as described in US 4,866,113 by an azo coupling reaction of 1,4-bis-acetoacetylamino-2,5-dimethylbenzene with two equivalents of the diazonium salt of 3-amino-4-methoxy-(2,2',6,6'-tetramethyl-N-piperidinyl)-benzamide. At this stage the pigment usually does not allow to record any distinct X-ray diffraction. A more defined material is obtained by an aqueous aftertreatment of the crude microcrystalline form at elevated temperatures to result into the known alpha-modification.

Preferred solvents are selected from the group of cyclic or open-chain alkylamides or halogen-substituted benzenes or halogen-substituted naphthalenes. Most preferably, solvents are selected from the group consisting of N-methylpyrrolidone, o-dichlorobenzene, monochlorobenzene, and N,N-dimethylacetamide.

Preferably the treatment in the organic solvent is carried out at elevated temperatures, preferably from 80 to 180 °C, especially preferred from 100 to 170 °C, in particular from 120 to 160 °C.
The process of the invention is appropriately conducted such that a crude microcrystalline pigment of formula (I) or the alpha modification, is suspended or fully or partly dissolved in the respective organic solvent and the mixture is kept, preferably under stirring, at the stated temperature for 2 to 10 hours, preferably for around 4 to 6 hours. The amount of the organic solvent relative to the pigment can vary in wide ranges. However, it is economical to use 1 part by weight of the pigment in 2 to 100 parts by weight, in particular 5 to 50 parts by weight, of the organic solvent.

The invention also provides for a pigment prepared according to the process described beforehand.
The invention further provides a pigment of formula (I) in a crystal modification having color characteristics in the CIELAB system of chrome (C) of about 74.0 to 78.0 and hue (H) of about 87.0° to 91.0° , measured in HDPE at 1/3 standard depth according to DIN 53235.

Said pigment of the invention can be the beta crystal modification which is characterized in an X-ray diffraction pattern by a strong peak corresponding to two theta double glancing angles of 8.4, medium strength peaks corresponding to two theta double glancing angles of 12.5, 13.1, 20.7, 25.4, 26.0, 27.2 and 72.7 and several relatively weak peaks.
The beta crystal modification can be prepared by using aprotic dipolar solvents with a boiling point above 120 °C at 1013 hPa that are selected from the group of cyclic or open-chain alkylamides, particularly using N-methylpyrrolidone or N,N-dimethylacetamide as organic solvents in the above described process.

Said pigment of the invention can further be the gamma crystal modification which is characterized in an X-ray diffraction pattern by a strong peak corresponding to a two theta double glancing angle of 8.5, medium strength peaks corresponding to two theta double glancing angles of 6.1, 12.4, 12.6, 12.9, 14.1, 16.2, 20.6, 25.5, 26.0, 27.1, and 72.7 and several relatively weak peaks.
The gamma crystal modification can be prepared by using aprotic dipolar solvents with a boiling point above 120 °C at 1013 hPa that are selected from the group of halogen-substituted benzenes or halogen-substituted naphthalenes, particularly using ortho-dichlorobenzene or monochlorobenzene as organic solvents in the above described process.

The x-ray diffraction patterns are measured with Cu K alpha radiation. It will be understood that the d-value and the double glancing angle (2 Theta) are, of course, subject to fluctuation due to experimental error of + /- 0.2 (double glancing angle).

Depending on the purity of the reactants, the concentrations, the temperatures, the pressure, the presence of impurities or additives, and the presence of seed crystals, it is possible that pure beta or gamma modifications or mixtures comprising both of these modifications, and optionally a measurable amount of the alpha modification are formed.

The present invention therefore additionally provides a mixture of pigments of the formula (I) comprising at least 10 %, preferably at least 25 %, in particular at least 50 %, with particular preference at least 75 % and with very particular preference at least 90 % by weight of beta or gamma modification, or of a mixture of these two modifications.

Depending on the desired field of application, it may be sensible to subject the resulting pigment to mechanical fine division. The fine division may be carried out by wet or dry grinding or by kneading.
It is also possible at any point in the process to add pigments dispersants, surface-active agents, defoamers, extenders or other customary additives.

Due to the unique color characteristics, the outstanding fastness properties and the excellent rheological properties, the pigment modifications of the invention are highly suited for use in plastics and coating applications, particularly in polyolefin systems. Further it is worth to mention, that both new modifications, beta and gamma, do not show warpage in polyolefins, particularly high-density polyethylene (HDPE) which makes them valuable colorants for this field of technical application.

The pigments according to the invention are excellently suited for the coloring of polymer compositions, by which are meant solvent-free and solvent-containing compositions comprising plastics or synthetic resins. Such compositions are applied in oil-based or water-based paints, in coating materials, for the spin dyeing of viscose or cellulose acetate, or for pigmenting plastics, such as polyamide, polyethylene, polystyrene, polyvinyl chloride, rubber and artificial leather.
The pigments according to the invention can also be used in printing inks for the graphical industry, for the coloring of paper pulps, for the coating of textiles or for pigment printing.
The resulting colorations are notable for their outstanding heat, light and weather fastness, chemical resistance, color strength and very good application properties, examples being their crystallization fastness and dispersing fastness, and in particular their fastness to migration, bleeding, overcoating and solvents.

In addition, the pigments of the invention are suitable as colorant in electrophotographic toners and developers, such as one- or two-component powder toners (also known as one- or two-component developers), magnetic toners, liquid toners, polymerization toners and further specialty toners.

A further area of application for the pigments of the invention is their use as colorants in powders and powder coating materials, especially triboelectrically or electro kinetically sprayed powder coating materials, which are used to coat the surfaces of articles made, for example, from metal, wood, plastic, glass, ceramic, concrete, textile material, paper or rubber.

The pigments of the invention are also suitable, moreover, as colorant in inkjet inks, both aqueous and non-aqueous, and in inks which operate in accordance with the hot-melt process. The pigments of the invention are further suitable for cosmetics, like nail varnishes or makeup.
The pigments of the invention can also be used in reflective and transmissive color filters, pigmented photoresists and LCD applications.

In the following examples, parts and percentages are by weight.

### Example 1: Preparation of the crude microcrystalline and alpha form

In a 1 liter beaker, 45.75 parts of 3-amino-4-methoxy-(2,2',6, 6'-tetramethyl-N-piperidinyl)-benzamide are stirred for 15 minutes in 250 parts of water at 30 °C. Then 100 parts of concentrated hydrochloric acid are added within 20 minutes and the reaction mixture is further stirred for one hour. The mixture is then cooled to 0 to 5 °C by immersing the reaction vessel in an ice/water bath. 47 parts of aqueous sodium nitrite solution (30 % part by volume) are slowly added over a period of 30 minutes. The mixture is further stirred for 40 minutes at 0 to 5 °C. The resulting diazonium chloride solution is then clear-filtered.

22.8 parts of 1,4-bis-acetoacetylamino-2,5-dimethylbenzene are stirred in 200 parts of water, in a beaker. Then 30 parts of aqueous sodium hydroxide solution (40 % part by volume) are added within 10 minutes, in order to dissolve the coupling component. This solution is then dropped within 15 minutes into a stirred 5 liter beaker containing 800 parts of water, 63 parts of acetic acid and 4.8 parts by volume of a dispersing agent. Then 89 parts of aqueous sodium hydroxide solution (40 % part by volume) are added to the suspension of the precipitated coupling component. This suspension is further stirred at 30 °C for 30 minutes.
The diazonium solution, kept at 0 to 5 °C, is then slowly pumped into the coupling component over a period of 3 hours, whilst stirring. The resulting yellow suspension containing crude microcrystalline pigment of formula (I) is further stirred for 2 hours.

A solution of 80 part of aqueous sodium hydroxide solution (40 % part by volume) is added to that yellow suspension to adjust the pH to alkaline. The suspension is further heated for 90 minutes at 80 °C . Then it is filtered hot on a Buchner filter and washed with 2000 parts of hot water. The resulting wet cake is dried in an oven at 70 °C overnight, to give 69 parts of dry pigment of the formula (I), as fine, yellow powder. The X-ray diffraction pattern indicates that the pigment consists of the alpha phase.

### Example 2: Preparation of the beta modification in N-methylpyrrolidone:

8 parts of the alpha phase of example 1 are stirred in 104 parts of N-methylpyrrolidone for 2 hours. The suspension is then heated to 150 °C within one hour, whilst stirring, and further stirred at this temperature for 5 hours. The suspension is then cooled to 80 °C, filtered and washed with 20 parts of N-methylpyrrolidone (at 80 °C) and then with 100 parts of water. The resulting wet cake is dried in an oven at 70 °C overnight, to give 7.8 parts of dry yellow pigment of the formula (I), which is the beta modification characterized by the following X-ray diffraction pattern:

| double glancing angle(2 Theta) | d-spacing (Angstrom) | relative intensity ( %) |
|---|---|---|
| 5.90 | 15.0 | 7.94 |
| 8.48 | 10.43 | 100 |
| 10.93 | 8.09 | 5.06 |
| 11.66 | 7.59 | 3.86 |
| 12.55 | 7.05 | 13.34 |
| 13.31 | 6.65 | 14.68 |
| 14.99 | 5.91 | 9.37 |
| 16.12 | 5.50 | 10.74 |
| 16.73 | 5.30 | 8.62 |
| 17.41 | 5.09 | 8.30 |
| 19.68 | 4.51 | 8.64 |
| 20.80 | 4.27 | 14.87 |
| 22.01 | 4.04 | 9.73 |
| 23.81 | 3.73 | 7.40 |
| 25.41 | 3.51 | 24.06 |
| 25.94 | 3.43 | 19.44 |
| 27.32 | 3.26 | 24.04 |
| 29.08 | 3.07 | 1.76 |
| 31.24 | 2.86 | 1.36 |
| 42.11 | 2.15 | 7.09 |
| 43.67 | 2.07 | 6.31 |
| 49.1 | 1.86 | 5.49 |
| 50.89 | 1.79 | 2.02 |
| 72.66 | 1.30 | 38.51 |
| 88.30 | 1.11 | 6.24 |

### Example 3: Preparation of the gamma modification in ortho-dichlorobenzene:

40 parts of the alpha phase of example 1 are stirred in 1300 parts of ortho-dichlorobenzene for 2 hours. The suspension is then heated to 150 °C in an autoclave within one hour, whilst stirring, and further stirred at this temperature for 5 hours. The suspension is then cooled to 80 °C, filtered and washed with 50 parts of ortho-dichlorobenzene (at 80 °C) and then with 150 parts of water. The resulting wet cake is dried in an oven at 70 °C overnight, to give 36 parts of dry yellow pigment of the formula (I), which is the gamma modification according to the X-ray diffraction pattern.

| double glancing angle (2 Theta) | d-spacing (Angstrom) | relative intensity (%) |
|---|---|---|
| 6.12 | 14.43 | 7.74 |
| 8.52 | 10.38 | 100 |
| 9.86 | 8.96 | 5.59 |
| 11.18 | 7.9 | 4.77 |
| 12.41 | 7.12 | 12.17 |
| 12.59 | 7.02 | 13.07 |
| 12.94 | 6.83 | 12.1 |
| 14.13 | 6.26 | 15.66 |
| 16.25 | 5.45 | 18.78 |
| 17.16 | 5.17 | 7.53 |
| 19.90 | 4.46 | 7.42 |
| 20.71 | 4.31 | 13.23 |
| 21.18 | 4.19 | 8.57 |
| 21.76 | 4.08 | 7.79 |
| 22.34 | 3.98 | 8.93 |
| 22.78 | 3.90 | 7.21 |
| 23.46 | 3.79 | 6.09 |
| 24.11 | 3.69 | 7.58 |
| 25.47 | 3.49 | 18.95 |
| 25.98 | 3.42 | 15.67 |
| 27.16 | 3.28 | 21.85 |
| 29.21 | 3.06 | 1.73 |
| 42.07 | 2.15 | 3.72 |
| 43.71 | 2.07 | 6.25 |
| 49.07 | 1.85 | 3.43 |
| 72.64 | 1.30 | 18.75 |
| 88.26 | 1.11 | 3.18 |

### Example 4: Preparation of the beta modification in N,N-dimethylacetamide:

45 parts of the alpha phase of example 1 are stirred in 650 parts of N, N-dimethyl acetamide for 2 hours. The suspension is then heated to 150 °C within one hour, whilst stirring, and further stirred at this temperature for 5 hours. The suspension is then cooled to 80 °C, filtered and washed with 50 parts of N,N-dimethyl acetamide (at 80 °C) and then with 150 parts of water. The resulting wet cake is dried in an oven at 70 °C overnight, to give 41 parts of dry yellow pigment of the formula (I), which is the beta modification:

| double glancing angle(2 Theta) | d-spacing (Angstrom) | relative intensity ( %) |
|---|---|---|
| 5.81 | 15.20 | 4.16 |
| 8.33 | 10.62 | 77.34 |
| 10.88 | 8.13 | 7.12 |
| 11.52 | 7.67 | 5.32 |
| 12.41 | 7.15 | 15.22 |
| 13.17 | 6.79 | 18.13 |
| 14.77 | 6.00 | 11.62 |
| 16.02 | 5.53 | 13.51 |
| 17.13 | 5.17 | 10.63 |
| 19.42 | 4.57 | 7.91 |
| 20.56 | 4.32 | 18.23 |
| 22.59 | 4.06 | 10.30 |
| 23.69 | 3.75 | 10.29 |
| 25.37 | 3.51 | 26.99 |
| 25.98 | 3.43 | 20.13 |
| 27.20 | 3.28 | 29.24 |
| 28.97 | 3.08 | 4.00 |
| 31.07 | 2.88 | 1.82 |
| 42.07 | 2.14 | 7.25 |
| 43.62 | 2.08 | 8.73 |
| 49.08 | 1.85 | 5.44 |
| 50.82 | 1.80 | 2.81 |
| 72.66 | 1.30 | 44.82 |
| 88.23 | 1.11 | 7.10 |

The sample contained traces of NaCl as detectable by additional peaks at 2theta 38.44, 44.68 (100 %), 65.05, 78.17.

### Example 5: Preparation of the gamma modification in monochlorobenzene:

11.5 parts of the alpha phase of example 1 are stirred in 300 parts of monochlorobenzene for 2 hours. The suspension is then heated to 150 °C in an autoclave within one hour, whilst stirring, and further stirred at this temperature for 5 hours. The suspension is then cooled to 80 °C, filtered and washed with 50 parts of monochlorobenzene (at 80 °C) and then with 150 parts of water. The resulting wet cake is dried in an oven at 70 °C over night, to give 11 parts of dry pigment of the formula (I), which is the gamma modification:

| double glancing angle (2 Theta) | d-spacing (Angstrom) | relative intensity (%) |
|---|---|---|
| 6.13 | 14.4 | 9.33 |
| 8.52 | 10.37 | 100 |
| 9.85 | 8.98 | 7.33 |
| 11.21 | 7.88 | 6.85 |
| 12.43 | 7.11 | 14.15 |
| 12.61 | 7.01 | 15.07 |
| 12.92 | 6.84 | 14.92 |
| 14.10 | 6.28 | 20.78 |
| 16.22 | 5.46 | 22.09 |
| 17.20 | 5.15 | 8.19 |
| 17.83 | 4.98 | 5.27 |
| 19.88 | 4.46 | 8.41 |
| 20.58 | 4.31 | 16.33 |
| 21.25 | 4.18 | 9.94 |
| 22.36 | 3.97 | 10.09 |
| 22.73 | 3.91 | 8.15 |
| 23.46 | 3.79 | 6.94 |
| 24.10 | 3.69 | 8.73 |
| 25.46 | 3.49 | 21.52 |
| 25.98 | 3.42 | 18.99 |
| 26.09 | 3.41 | 16.99 |
| 27.14 | 3.28 | 25.59 |
| 29.19 | 3.05 | 2.21 |
| 42.08 | 2.14 | 4.43 |
| 43.65 | 2.07 | 5.51 |
| 49.06 | 1.86 | 4.28 |
| 72.67 | 1.30 | 26.54 |
| 88.29 | 1.10 | 4.45 |

### Application example 1: Colorations in HDPE

The pigments prepared in the previous Examples are mixed at 1/3 standard depth according to DIN 53235 (approximately at 1200-1400 mg/Kg pigment concentration in presence of 1% titanium dioxide) into a high density polyethylene, e. g. Hostalen^{®} GC 7260 (a Trademark of TICONA), stabilized with 0.1 % of a phosphorus containing additive. The following data on color characteristics are measured in the CIELAB system:

| | Example 1 Comparison | Example 2 | Example 3 | Example 4 | Example 5 |
|---|---|---|---|---|---|
| Hue angle | 86.1 | 87.2 | 89.71 | 90.23 | 89.43 |
| Chroma (C) | 70.2 | 77.8 | 76.58 | 76.55 | 76.51 |

The data clearly show that the pigments for formula (1) that were prepared according to present invention - beta phase, examples 2 and 3; gamma phase , examples 4 and 5 - possess significantly higher chroma (C) and a significantly greener hue as compared to the alpha phase of example 1.

## Claims

1. A process for preparing a pigment of formula (I) in a neutral yellow crystal modification, 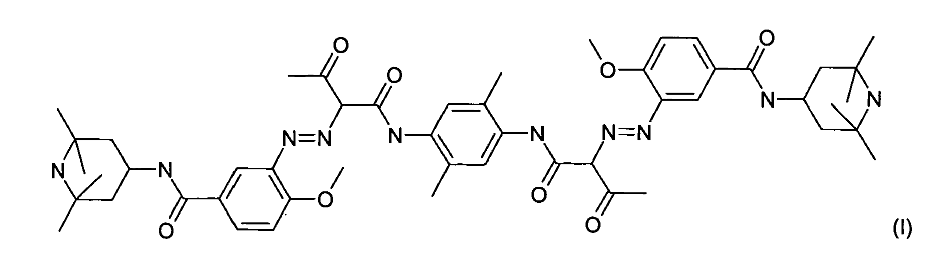 comprising the step of treating a crude microcrystalline form or the alpha phase of the pigment of formula (I) at elevated temperatures in an organic solvent selected from the group of aprotic dipolar solvents with a boiling point above 120 °C at 1013 hPa.

2. The process as claimed in claim 1, wherein the organic solvent is selected from the group of cyclic or open-chain alkylamides or halogen-substituted benzenes or halogen-substituted naphthalenes.

3. The process as claimed in claim 1 or 2, wherein the organic solvent is selected from the group consisting of N-methylpyrrolidone, N,N-dimethylacetamide, o-dichlorobenzene, and monochlorobenzene,

4. The process as claimed in claim 1, wherein the treatment in the organic solvent is carried out at temperatures from 80 to 180 °C.

5. A pigment prepared according to the process as claimed in any of claims 1 to 4.

6. A pigment of formula (I) 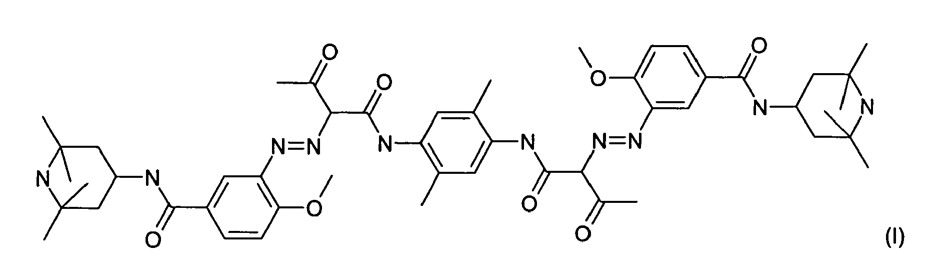 having color characteristics in the CIELAB system of chrome (C) of 74.0 to 78.0 and hue (H) of 87.0° to 91.0°, measured in HDPE at 1/3 standard depth according to DIN 53235.

7. The pigment as claimed in claim 5 or 6, **characterized by** the following characteristic reflections in the X-ray powder diagram, measured with Cu-Kₐₗₚₕₐ radiation which is **characterized in** an X-ray diffraction pattern by a strong peak corresponding to two theta double glancing angles of 8.4, medium strength peaks corresponding to two theta double glancing angles of 12.5, 13.1, 20.7, 25.4, 26.0, 27.2 and 72.7.

8. The pigment as claimed in claim 5 or 6, **characterized by** the following characteristic reflections in the X-ray powder diagram, measured with Cu-Kₐₗₚₕₐ radiation which is **characterized in** an X-ray diffraction pattern by a strong peak corresponding to a two theta double glancing angle of 8.5, medium strength peaks corresponding to two theta double glancing angles of 6.1, 12.4, 12.6, 12.9, 14.1, 16.2, 20.6, 25.5, 26.0, 27.1, and 72.7.

9. A mixture of pigments comprising at least 10 %, preferably at least 25 %, in particular at least 50 %, with particular preference at least 75 % and with very particular preference at least 90 %, by weight of pigments as claimed in any of claims 5 to 8.

10. The use pigments as claimed in any of claims 5 to 9 for pigmenting polymeric compositions or inks.

11. The use as claimed in claim 10 for pigmenting oil-based or water-based paints, for spin dyeing of viscose or cellulose acetate, for pigmenting plastics, such as polyamide, polyethylene, polystyrene, polyvinyl chloride, rubber and artificial leather.
